# EUROPEAN PATENT SPECIFICATION

(11) **EP 4 257 733 B1**
(45) Date of publication and mention of the grant of the patent: **12.08.2026**
(21) Application number: 22867670.6
(22) Date of filing: 06.09.2022
(51) Int. Cl.: C25C 3/34, C01F 17/229, C01F 17/20, C01F 17/247, C25C 7/00, C25C 7/02

(54) **METHOD FOR ELECTROWINNING NEODYMIUM COMPOUND**
VERFAHREN ZUR ELEKTROLYTISCHEN GEWINNUNG VON NEODYMVERBINDUNG
PROCÉDÉ D'EXTRACTION ÉLECTROLYTIQUE D'UN COMPOSÉ NÉODYME

(30) Priority: 10.09.2021 KR 20210120861
(43) Date of publication of application: 11.10.2023
(73) Proprietor: KSM Technology Co., Ltd., Sejong 30127 (KR)
(72) Inventor: RYU, Hong Youl, Sejong 30126 (KR); WOO, Hwa Young, Cheongju-si, Chungcheongbuk-do 28121 (KR); RI, Vladislav, Cheongju-si, Chungcheongbuk-do 28362 (KR); SONG, Ju Hwan, Cheongju-si, Chungcheongbuk-do 28116 (KR); KIM, Jeong Mo, Daegu 42511 (KR)
(74) Representative: Murgitroyd & Company
(86) International application number: PCT/KR2022/013361
(87) International publication number: WO 2023/038401

(56) References cited:
- CN-A- 109 136 996
- JP-A- 2020 158 730
- JP-A- H0 748 688
- JP-A- H10 176 296
- KR-A- 20070 001 137
- KR-A- 20160 116 429
- KR-B1- 102 433 224
- NO-B- 176 190
- US-A- 4 747 924
- US-A1- 2012 156 492

## Description

### Technical Field

The present disclosure relates to a method for electrowinning of a neodymium compound.

### Background Art

Permanent magnets have been applied in various fields, and various studies have been conducted to improve the performance of permanent magnets. In particular, from the viewpoint of energy saving or environmental friendliness, studies on permanent magnets have been actively conducted in fields such as IT, automobiles, and home appliances.

The most widely used neodymium magnet among permanent magnets is a permanent magnet based on a neodymium-iron-boron (Nd-Fe-B)-based intermetallic compound (Nd₂Fe₁₄B). Since neodymium magnets have advantages such as excellent magnetic properties, high strength, and low production cost, they have been used in various industrial products and their production volume has increased exponentially. The main applications of neodymium (Nd) magnets include hard disk voice coil motors, air conditioner compressor motors, motors for hybrid vehicles, and the like.

Meanwhile, for neodymium (Nd) which is a raw material for neodymium magnets, mineral deposits with excellent mining potential are concentrated in a specific country. Due to the export regulations of the corresponding country, etc., the price of neodymium is likely to fluctuate and the stable supply of neodymium is becoming difficult. Therefore, an efficient process for smelting neodymium for use in the manufacture of permanent magnets and the like is further required.

Meanwhile, a thermal reduction method has also been used for smelting of neodymium, but this method is not suitable for industrial mass production because continuous smelting is not possible.

Regarding a method for electrowinning of neodymium, a method of electrowinning neodymium by reducing neodymium oxide using neodymium oxide powder is conventionally known. However, when neodymium oxide powder is used, the raw material is scattered during the process, causing problems in the process. In addition, since the neodymium oxide powder precipitates and agglomerates in the electrolytic bath, difficulties arise in the recovery of reduced neodymium. In addition, when process conditions are not maintained during the oxidation of neodymium oxide using a fluoride-based electrolyte, small amounts of fluorine-containing compounds such as CF₄ gas, which is a greenhouse gas, are generated, which greatly affect the greenhouse effect.

Furthermore, a conventional process has problems in that the electrolyte easily evaporates at the exposed electrolyte surface and the exposed electrode is likely to be oxidized by reaction with oxygen in the air. NO 176 190 B discloses a method for electrowinning neodymium compound in an electrolytic bath including a cathode and an anode, providing a fluoride-based molten electrolyte (which is a mixture of LiF and NdF3) in the bath.

Therefore, there is a continued demand for a method of reducing neodymium oxide that is environmentally friendly, inexpensive, and highly efficient.

### Patent Documents

Japanese Patent Application Publication No. 2020-158730
Korean Patent Application Publication No. 10-2007-0001137

### Disclosure of Invention

### Technical Goals

The present invention according to claim 1 has been made in order to solve the problems occurring in the conventional technology, and an object of the present disclosure is to provide an environmentally friendly, inexpensive, and highly efficient method of reducing a neodymium compound using granules, each including the neodymium compound and having at least one cavity defined therein.

Another object of the present disclosure is to provide a method for reducing a neodymium compound, which may increase the high-quality production rate of a final product compared to the conventional technology and is advantageous for commercialization due to its high energy efficiency.

Still another object of the present disclosure is to provide a method for producing neodymium compound granules suitable for use in the above-described excellent method for reducing a neodymium compound.

### Technical solutions

The invention provides a method according to claim 1.

According to another aspect of the present disclosure, there is provided a method for producing neodymium compound granules for use in electrowinning, the method including: forming a granule precursor by adding a binder to neodymium compound powder or adding the binder to a mixture of neodymium compound powder and graphite powder; drying the granule precursor; and heat-treating and sintering the dried granule precursor by heating at a temperature of 800°C to 1,500°C.

### Brief Description of Drawings

FIG. 1 is a schematic sectional view of an electrolytic bath in which an electrowinning process is in progress;
FIG. 2 shows neodymium compound granules, specifically neodymium oxide granules;
FIG. 3 shows the operation of mixing Nd₂O₃ powder and graphite powder (a to c), and a granule forming operation and granule spheronization operation (d);
FIG. 4 shows neodymium oxide granules of Example 1;
FIG. 5 shows neodymium oxide granules of Example 2;
FIG. 6a is a view showing a piece of the granule of Example 1;
FIG. 6b is an enlarged view showing the granule of Example 1 at 1,000x magnification; and
FIG. 6c is an enlarged view showing the granule of Example 1 at 5,000x magnification.

### Best Mode for Carrying Out the Invention

Hereinafter, the intentions, actions and effects of the present disclosure will be described in detail through specific descriptions and examples to assist in understanding the example embodiments of the present disclosure and to implement these example embodiments. However, the following descriptions and example embodiments are presented as examples to assist in understanding the present disclosure as described above.

Prior to describing the present disclosure in detail, it should be noted that the terms or words used in the present specification and claims should not be construed as being limited to typical meanings or dictionary definitions, but should be interpreted as having meanings and concepts relevant to the technical scope of the present disclosure, based on the principle according to which an inventor may appropriately define the meanings of the terms in order to describe his or her invention in the best way.

Accordingly, it should be understood that the example embodiments described in the present specification and the configurations shown in the drawings are merely the most preferred example embodiments, but do not cover all the technical scope of the present disclosure, so that there may be various equivalents and modifications capable of replacing them at the time of filing the present embodiments.

In the present specification, singular expressions include plural expressions unless the context clearly indicates otherwise. In the present specification, it should be understood that terms such as "include" and "have" are intended to denote the presence of mentioned characteristics, numbers, operations, components, or combinations thereof, but do not exclude the possibility of presence or addition of one or more other characteristics, numbers, operations, components, or combinations thereof.

The term "and/or" as used herein refers to and encompasses any and all possible combinations of one or more of the associated listed items.

As used herein, the term "same" is a term including cases in which there are only ordinary slight differences that may occur for various reasons such as processes in the art.

Hereinafter, the present disclosure will be described in detail in the order of a method for producing granules for use in a method for electrowinning of a neodymium compound according to claim 1, a method for electrowinning of a neodymium compound, and examples.

### 1. Method for electrowinning of neodymium compound

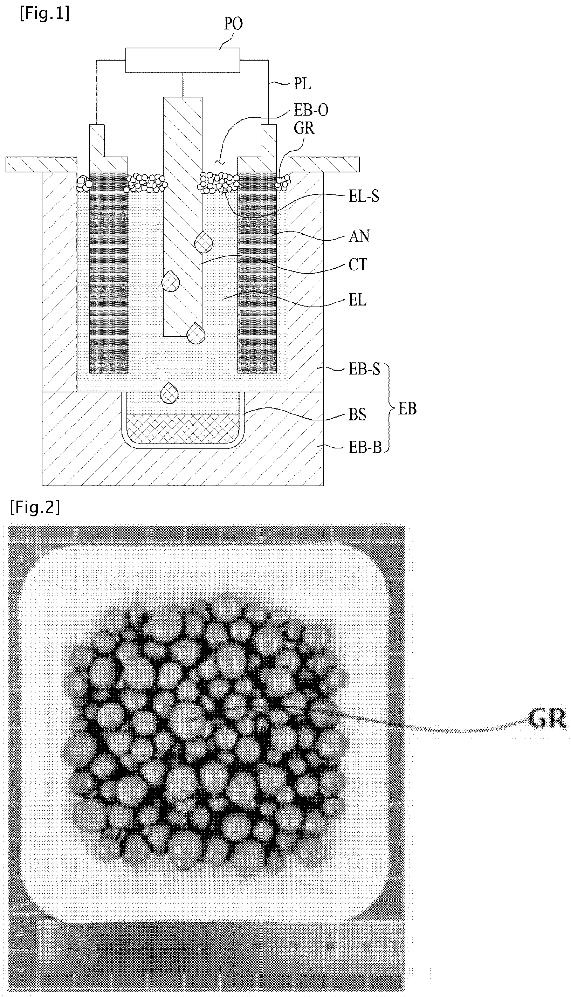

Hereinafter, a method of obtaining reduced pure neodymium (ND) metal by electrowinning a neodymium compound according to the present disclosure will be described in detail with reference to FIGS. 1 and 2. In this specification, although the electrowinning method will be described based on individual operations, this does not specify the order of the operations. It is to be understood that the individual operations of the method of the present disclosure may not proceed in the order described herein unless contradictory, and the operations may proceed concurrently. FIG. 1 is a schematic sectional view of an electrolytic bath EB in which an electrowinning process is in progress. FIG. 2 shows neodymium compound granules (GR), specifically neodymium oxide granules (GR).

A method for electrowinning neodymium compound according to the present disclosure includes the operations of:
providing a fluoride-based electrolyte (EL) through an opening (EB-O) defined in an electrolytic bath including a cathode (CT) and an anode (AN); providing granules (GR), each including a neodymium compound and having at least one cavity (CV) defined therein, through the opening (EB-O) defined in the electrolytic bath (EB); dissolving at least a portion of the granules (GR) in a molten salt of the fluoride-based electrolyte (EL); and reducing neodymium (ND) at the cathode (CT), wherein the cavity may be defined inside or on the surface of the granule (GR), and the apparent density of the granules (GR) may be lower than the density of the molten salt, wherein at least a portion of each of the cathode (CT) and the anode (AN) is immersed in the molten salt.

The electrolytic bath (EB) may include a bottom (EB-B) and a side (EB-S). In addition, the opening (EB-O) may be defined in the electrolytic bath (EB). During the process, the electrolyte (EL) and/or the granules (GR) may be provided through the opening (EB-O).

A basket (BS) for accommodating neodymium (ND) reduced by a reaction between the electrolyte (EL) and the cathode (CT) may be provided at the bottom (EB-B) of the electrolytic bath (EB). The basket (BS) may be provided under the cathode (CT) so that it corresponds to the position of the cathode (CT), but the example embodiment is not limited thereto. Although not shown in the drawing, the basket (BS) may include a tapping spout for easily recovering the reduced neodymium (ND). The tapping spout may be opened or closed through a separate device, and the reduced neodymium (ND) in a molten state may be recovered through the tapping spout. However, the example embodiment is not limited thereto, and the reduced neodymium (ND) may be recovered through the opening (EB-O) defined in the electrolytic bath (EB).

In one example embodiment, the fluoride-based electrolyte (EL) may include a mixed salt of an alkali metal or alkaline earth metal fluoride compound and NdF₃. The fluoride-based electrolyte (EL) may be provided in the form of a molten salt of an alkali metal or alkaline earth metal fluoride compound and NdF₃. One, two, or more alkali metal or alkaline earth metal fluoride compounds may be included in the fluoride-based electrolyte (EL). Examples of the alkali metal or alkaline earth metal in the alkali metal or alkaline earth metal fluoride compound include Li, Mg, Na, K and Ca. The alkali metal or alkaline earth metal fluoride compound may be used without particular limitation as long as it is a compound used in the technical field, such as LiF or CaF₂. The fluoride-based electrolyte (EL) may include, for example, a mixed salt of LiF and NdF₃. Due to the high melting point of NdF₃, it is difficult to perform electrowinning of NdF₃ alone. However, by using an alkali fluoride compound such as LiF, it is possible to use a eutectic composition having a low melting point in the process.

The fluoride-based electrolyte (EL) may include, based on the total weight of the electrolyte (EL), 5 to 50 wt.% or 10 to 50 wt.% of LiF and 20 to 95 wt.% or 20 to 80 wt.% of NdF₃. In the electrolyte (EL), LiF and NdF₃ may be included at a weight ratio of about 40:60 to 5:95, or about 40:60 to 20:80, for example, about 30:70.

The cathode (CT) and the anode (AN) may be spaced apart from each other by a predetermined distance. The cathode (CT) and the anode (AN) may be electrically connected to a power supply unit (PO) that supplies power. For example, each of the cathode (CT) and the anode (AN) may be electrically connected to the power supply unit (PO) through a power supply line (PL). When a current is supplied from the power supply unit (PO) to the cathode (CT) and the anode (AN) through the power supply line (PL), the neodymium compound may be reduced to neodymium metal at the cathode (CT) to obtain pure neodymium (ND) metal.

At least a portion of the cathode (CT) and/or the anode (AN) are immersed in the molten salt. At least a portion of the cathode (CT) and/or the anode (AN), particularly the anode (AN), may be exposed to air. That is, the cathode (CT) and/or the anode (AN) may include a contact portion, immersed in the electrolyte (EL) to contact the electrolyte, and an exposed portion exposed to air.

Referring to FIG. 1, one cathode (CT) and two anodes (AN) are illustrated as being provided in the electrolytic bath (EB), but the example embodiment is not limited thereto. The electrolytic bath (EB) may include 1 to 5, 1 to 4, 1 to 3, or 1 or 2 cathodes (CT) and/or anodes (AN). For example, the electrolytic bath (EB) may include one cathode (CT) and one, two, or four anodes (AN). As shown in FIG. 1, the anode (AN) is shown as being arranged to surround the cathode (CT), but the example embodiment is not limited thereto, and any conventional electrode arrangement known in the technical field may be applied to the present disclosure without limitation.

The above descriptions of the cathode (CT), the anode (AN) and the electrolytic bath (EB) are illustrative. It is obvious that the structures of the cathode (CT), the anode (AN) and the electrolytic bath (EB) may be modified into forms commonly used in the technical field.

Meanwhile, in a conventional technology, powder including neodymium oxide was introduced into the electrolytic bath (EB) and the process proceeds. Thus, the powder including neodymium oxide was scattered into the air, resulting in loss of the raw material and difficulties in the process. In particular, since very high heat was applied to the electrowinning process, the powder was very actively scattered by thermal convection generated by the heat, resulting in loss of the raw material and a great problem in process safety.

Furthermore, a problem arose in that, since the density of the powder including neodymium oxide was higher than the density of the electrolyte (EL), the powder settled on the bottom of the electrolytic bath (EB). The settled neodymium oxide powder is poorly soluble in the electrolyte and does not participate in the reaction. In addition, a periodic stirring process is required to treat the settled neodymium oxide powder. As a result, various process problems occurred, such as an increase in process difficulty and a decrease in yield.

In one example embodiment of the present disclosure, granules (GR) including a neodymium compound are provided in the electrolytic bath. Thus, the granules (GR) may be easily introduced without scattering in the air. In addition, since the density of the granules (GR) is lower than the density of the electrolyte (EL), they can continuously float on the surface (EL-S) of the electrolyte (EL), and thus the granules (GR) do not settle at the bottom of the electrolytic bath (EB).

In addition, the neodymium compound may be continuously supplied to the electrolyte (EL) while the granules (GR) remain on the surface (EL-S) of the electrolyte (EL). Since continuous electrowinning is possible for a long time, the process may speed up, and the cost used in the process may also be reduced.

In one example embodiment, the granules (GR) are continuously dissolved in the electrolyte (EL) as neodymium is reduced, and thus the concentration of the neodymium compound in the electrolyte (EL) may be maintained at a constant level. For example, the concentration of the neodymium compound in the electrolyte (EL) may be maintained at about 0.1 to 5 wt.%, about 0.5 to 3 wt.%, about 1 to 3 wt.%, or about 2 wt.%.

The operation of providing the granules (GR) may include the operation of covering the surface (EL-S) of the electrolyte (EL) and the exposed portion of the anode (AN) with the granules (GR). In this specification, the surface (EL-S) of the electrolyte (EL) is defined as a surface where the electrolyte (EL) comes into contact with air.

The cathode (CT) and the anode (AN) may include materials commonly used in the technical field. For example, the cathode (CT) may include tungsten or molybdenum, and the anode (AN) may include graphite. For example, the cathode (CT) may be a tungsten electrode made of tungsten, and the anode (AN) may be a graphite electrode made of graphite. The cathode (CT) may include, for example, iron (Fe). For example, when the cathode (CT) includes iron, neodymium may be smelted in the form of an iron alloy (NdFe).

As shown in the drawing, one or more (for example, two or more) anodes (AN) may be disposed in the electrolytic bath (EB), but the present disclosure is not limited thereto.

At the cathode (CT), neodymium ion may be reduced to neodymium metal by a reaction according to Reaction Formula 1 below.

[Reaction Formula 1] Nd³⁺ + 3e⁻ = Nd

At the anode (AN), carbon dioxide gas may be generated by a reaction according to Reaction Formula 2 below. When process conditions are not maintained, gases such as carbon tetrafluoride may be generated by a reaction according to Reaction Formula 3 below.

[Reaction Formula 2] C + 2O²⁻ = CO₂ + 4e⁻

[Reaction Formula 3] C + 4F⁻ = CF₄ + 4e⁻

The process temperature of the electrowinning process may be higher than the temperature at which the electrolyte is melted and neodymium compound is reduced. For example, the electrowinning process may be performed by selecting the most reasonable temperature in terms of thermal efficiency from among temperatures of about 800 to 1,300°C, about 800 to 1,100°C, about 800 to 900°C, or about 1,200°C. In this high-temperature process, the cathode (CT) and/or the anode (AN) may be heated to a high temperature. In this case, exposed portions of the cathode (CT) and/or the anode (AN) may be oxidized by contact with air. For example, when the anode (AN) includes graphite, carbon in an exposed portion of the anode (AN) may react with oxygen in the air to form carbon dioxide. In this case, the consumption rate due to oxidation of the anode (AN) may increase, and thus the replacement cycle of the anode (AN) may be very frequent. In addition, when the electrolyte (EL) is heated at high temperature, the molten salt is evaporated and lost, and thus a process of continuously replenishing the electrolyte (EL) is required. Thus, a problem arises in that the process slows down and the process cost is increased.

However, in one example embodiment of the present disclosure, the granules (GR) are provided to cover the surface (EL-S) of the electrolyte (EL) and the exposed portion of the anode (AN), and thus the surface (EL-S) of the electrolyte (EL) and the exposed portion of the anode (AN) are prevented from being exposed to air.

More specifically, in the operation of providing the granules (GR) to the electrolytic bath (EB), the granules (GR) may cover the surface of the molten salt and at least a portion of the exposed portion of the anode (AN), thereby blocking or reducing the contact of the anode (AN) and the molten salt with a gas. For example, the granules (GR) may cover both the surface of the molten salt and the exposed portion of the anode (AN).

Therefore, according to one example embodiment of the present disclosure, oxidation of the anode (AN) by reaction with air may be prevented or reduced, and evaporation of the electrolyte (EL) into the air may also be prevented or reduced. Accordingly, the interval for replacing the anode (AN) or replenishing the electrolyte (EL) may be minimized, and thus continuous electrowinning is possible for a long time and material costs may be reduced. Thus, according to one example embodiment, high process speed and cost reduction may be achieved.

Meanwhile, fluorocarbon gases such as CF₄ or C₂F₆, which are greenhouse gases, may be generated during the electrowinning process of the neodymium compound. CF₄ has a global warming potential about 6,500 times higher than CO₂ and takes about 50,000 years to naturally decompose in the air, and C₂F₆ has a global warming potential about 9,200 times higher than CO₂ and takes about 10,000 years to naturally decompose in the air. Thus, these fluorocarbon gases can cause fatal environmental pollution. Therefore, according to a conventional process, much cost may be incurred to provide facilities for treating fluorocarbon gases. However, according to one example embodiment, the neodymium compound granules (GR) cover at least a portion or all of the electrolyte surface (EL-S), and thus CF₄ gas may contact the neodymium compound granules (GR) while being emitted, and may chemically react according to Reaction Formula 4 below, for example.

[Reaction Formula 4] 2Nd₂O₃ + 3CF₄ = 2NdF₃ + 3CO₂

Accordingly, equipment costs for treating CF₄ may be reduced, and process costs may be reduced because the greenhouse gas CF₄ may be converted to NdF₃ again.

Referring to FIG. 2, in one example embodiment, the shape of the granule (GR) may be spherical or may be quasi-spherical with curves on the spherical surface. However, the example embodiment is not limited thereto, and the granule (GR) may be defined in various shapes depending on the production process and production method. Referring to FIG. 2, in one example embodiment, the diameter of the granule (GR) may be about 1 mm to 50 mm, about 1 mm to 30 mm, about 1 mm to 15 mm, about 1 mm to 10 mm, about 1 mm to 5 mm, about 1 mm. When the granule (GR) is not spherical, the diameter of the granule (GR) may mean the average length of line segments connecting two points on the circumference of the granule GR to a straight line passing through the center of gravity of the granule (GR).

The above-described diameter of the granule (GR) may mean the diameter of each individual granule (GR) or the average diameter of a plurality of granules (GR). In one example embodiment, the diameters of the plurality of granules (GR) may be substantially the same as or different from each other.

The diameter of the granule (GR) is not limited to the above-mentioned length. However, when the diameter of the granule (GR) is within the above-described range, the volume may be properly maintained while the exposed portion of the anode AN and the surface EL-S of the electrolyte EL are sufficiently blocked from the air.

As used herein, the term "neodymium compound" may be defined as including at least one selected from the group consisting of neodymium oxide, praseodymium-neodymium oxide, neodymium oxalate, praseodymium-neodymium oxalate, neodymium carbonate, and praseodymium-neodymium carbonate.

In one example embodiment, neodymium oxide may include Nd₂O₃, neodymium oxalate may include Nd₂(C₂O₄)₃, and neodymium carbonate may include Nd₂(CO₃)₃. The theoretical decomposition potential of Nd₂O₃ is about 2.4 to 2.6 V, which is lower than the decomposition potential of NdF₃ (about 4.6 to 5.6 V). Thus, it is possible to selectively smelt Nd₂O₃ in the electrolyte (EL) by applying a current within the decomposition potential range of Nd₂O₃.

In one example embodiment, praseodymium-neodymium oxide, praseodymium-neodymium oxalate and praseodymium-neodymium carbonate may be those in which Nd₂O₃ may be in physically mixed or chemically combined forms of Pr₆O₁₁, Nd₂(C₂O₄)₃ and Pr₂(C₂O₄)₃, Nd₂(CO₃)₃ and Pr₂(CO₃)₃, respectively.

In one example embodiment, in the praseodymium-neodymium oxide (Nd₂O₃+Pr₆O₁₁) in which Nd₂O₃ and Pr₆O₁₁ are chemically combined with each other, Nd₂O₃ may be included in an amount of more than 70 wt.% (Nd₂O₃>70%), more than 75 wt.%, more than 80 wt.%, more than 85 wt.%, more than 90 wt.%, or more than 95 wt.%, based on the total weight of the praseodymium-neodymium oxide, and Pr₆O₁₁ may be included in an amount of less than 30 wt.%, less than 25 wt.%, less than 20 wt.%, less than 15 wt.%, less than 10 wt.%, or less than 5 wt.%, based on the total weight of the praseodymium-neodymium oxide. The molar ratio of praseodymium relative to the total number of moles of praseodymium and neodymium elements in the praseodymium-neodymium oxide may be about 30% or less, 25% or less, about 20% or less, about 15% or less, about 10% or less, or about 5% or less.

In one example embodiment, in the praseodymium-neodymium oxalate (Nd₂(C₂O₄)₃+Pr₂(C₂O₄)₃) in which Nd₂(C₂O₄)₃ and Pr₂(C₂O₄)₃ are chemically combined with each other, Nd₂(C₂O₄)₃ may be included in an amount of more than 70 wt.% (Nd₂(C₂O₄)₃>70%), more than 75 wt.%, more than 80 wt.%, more than 85 wt.%, more than 90 wt.%, or more than 95 wt.%, based on the total weight of the praseodymium-neodymium oxalate, and Pr₂(C₂O₄)₃ may be included in an amount of less than 30 wt.%, less than 25 wt.%, less than 20 wt.%, less than 15 wt.%, less than 10 wt.%, or less than 5 wt.%, based on the total weight of the praseodymium-neodymium oxalate. The molar ratio of praseodymium relative to the total number of moles of praseodymium and neodymium elements in the praseodymium-neodymium oxalate may be about 30% or less, 25% or less, about 20% or less, about 15% or less, about 10% or less, or about 5% or less.

In one example embodiment, in the praseodymium-neodymium carbonate (Nd₂(CO₃)₃+Pr₂(CO₃)₃) in which Nd₂(CO₃)₃ and Pr₂(CO₃)₃ are chemically combined with each other, Nd₂(CO₃)₃ may be included in an amount of more than 70 wt.% (Nd₂(CO₃)₃>70%), more than 75 wt.%, more than 80 wt.%, more than 85 wt.%, more than 90 wt.%, or more than 95 wt.%, based on the total weight of the praseodymium-neodymium carbonate, Pr₂(CO₃)₃ may be included in an amount of less than 30 wt.%, less than 25 wt.%, less than 20 wt.%, less than 15 wt.%, less than 10 wt.%, or less than 5 wt.%, based on the total weight of the praseodymium-neodymium carbonate. The molar ratio of praseodymium relative to the total number of moles of praseodymium and neodymium elements in the praseodymium-neodymium carbonate may be about 30% or less, 25% or less, about 20% or less, about 15% or less, about 10% or less, or about 5% or less.

In one example embodiment, any one or more selected from the group consisting of neodymium oxide, neodymium oxalate and neodymium carbonate may be smelted together with any one or more selected from the group consisting of praseodymium-neodymium oxide, praseodymium-neodymium oxalate and praseodymium-neodymium carbonate, in the form of a praseodymium-neodymium alloy to one example embodiment of the present disclosure. Since praseodymium has properties similar to those of neodymium, a permanent magnet may be manufactured from a praseodymium-neodymium alloy smelted according to one example embodiment. For example, when the molar ratio of praseodymium is about 30% or less, 25% or less, about 20% or less, about 15% or less, about 10% or less, or about 5% or less, it is possible to manufacture a permanent magnet exhibiting excellent effects.

According to claim 1, the cavity (CV) is defined inside the granule (GR) or on the surface of the granule (GR). When the cavity (CV) is defined on the surface of the granule (GR), the cavity (CV) may be hemispherical or quasi-hemispherical in shape.

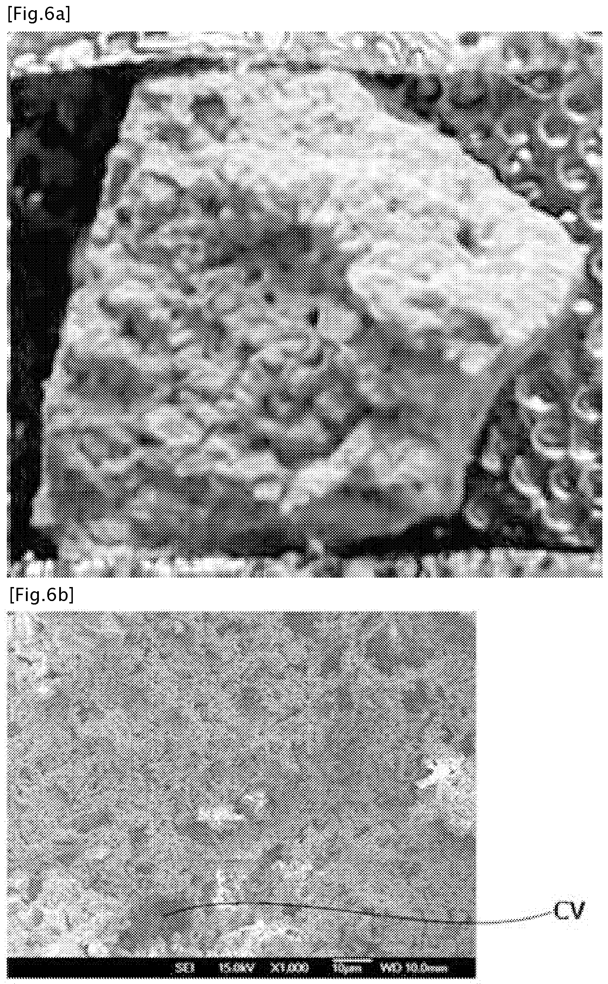

In one example embodiment, the diameter of the cavity (CV) may be 1 µm to 100 µm. The cavity (CV) is shown in more detail in FIGS. 6a to 6c to be described later.

The volume ratio of the cavity (CV) in the neodymium compound granule (GR) may be defined such that the density of the granule (GR) is lower than the density of the electrolyte (EL). For example, the volume ratio of the cavity (CV) defined in the neodymium compound granule (GR) (the volume of the cavity/the volume of the granule; hereinafter referred to as cavity percentage) may be defined as greater than or equal to the value (unit: %) calculated by Equation 1 below.$\left(1-density of molten salt/density of granules\right) \times 100$

In one example embodiment, the cavity percentage may be about 15% or more, about 35% or more, about 40% or more, about 45% or more, about 50% or more, or about 37.55% or more. When the cavity percentage is greater than or equal to the value calculated by Equation 1 above, the apparent density of the granules (GR) may be lower than the density of the molten salt.

In this specification, the cavity percentage is calculated based on the volume defined by all the cavities (CV) defined in the granule (GR).

In one example embodiment, the apparent density of the granules (GR) may be 2.0 g/cm³ to 6.0 g/cm³, 2.0 g/cm³ to 5.0 g/cm³, 2.5 g/cm³ to 5.0 g/cm³, 3.0 g/cm³ to 5.0 g/cm³, or 3.0 g/cm³ to 4.5 g/cm³, and the density of the molten salt may be 3.0 g/cm³ to 6.0 g/cm³, 3.0 g/cm³ to 5.0 g/cm³, 3.5 g/cm³ to 5.0 g/cm³, 4.1 g/cm³ to 5.0 g/cm³, 3.5 g/cm³ to 4.5 g/cm³, or 4.1 g/cm³ to 4.5 g/cm³.

For example, when the fluoride-based electrolyte (EL) includes LiF and NdF₃ at a weight ratio of 30:70 and the neodymium oxide is Nd₂O₃, the cavity percentage may be 37.55% or more, and the apparent density of the granules (GR) may be about 4.52 or less.

When the cavity percentage is within the above-described range, the granules (GR) may float well on the molten salt. In addition, the granules (GR) are not easily broken by impact during transportation, and thus storage and transportation convenience may be improved.

### 2. Method for producing neodymium compound granules

Hereinafter, a method for producing the above-described neodymium compound granules (GR) will be described in detail. In this specification, although the method for producing neodymium compound granules (GR) will be described based on individual operations, this does not specify the order of the operations. It is to be understood that the individual operations of the method of the present disclosure may not proceed in the order described herein unless contradictory, and the operations may proceed concurrently. In addition, it is to be understood that, unless contradictory, the above description about the neodymium compound granules (GR) used in the above- described method for electrowinning of the neodymium compound may equally applied to the neodymium compound granules (GR) produced by the production method of the present disclosure.

A method for producing neodymium compound granules (GR) for use in electrowinning according to the present disclosure may include the operations of:

forming a granule precursor by adding a binder to neodymium compound powder or adding the binder to a mixture of neodymium compound powder and graphite powder; drying the granule precursor; and heat-treating and sintering the dried granule precursor by heating at a temperature of 800°C to 1,500°C.

The operation of mixing the neodymium compound powder and the graphite powder may include the operations of: providing the neodymium compound powder and the graphite powder to a mixing device; and rotating the mixing device. The operation of forming the granule precursor may include the operation of adding the binder to the rotating mixing device. The binder allows the neodymium compounds or the neodymium compound and the graphite powder to be well combined with each other so that the granule precursor may be easily formed. The binder may be provided in the form of a binder solution in which the binder is dissolved in an aqueous solvent such as distilled water. For example, the proportion of the binder relative to the total weight of the binder solution may be about 1 wt.% to about 10 wt.%, about 3 wt.% to about 7 wt.%, or about 4 wt.%. Non-limiting examples of the binder include water, methanol, ethanol, propanol, iso-propanol, n-butanol, isobutanol, tert-butanol, polyvinyl alcohol, polyvinylpyrrolidone, polyacrylic acid, and polymethyl methacrylate. The mixing device may be rotated at about 50 rpm to about 200 rpm, about 50 rpm to about 150 rpm, about 80 rpm to about 120 rpm, for example, about 100 rpm.

The mixing may include spraying a volatile organic compound. Non-limiting examples of the volatile organic compound include, for example, organic compounds having a boiling point of 80°C or lower. Non-limiting examples of the organic compounds having a boiling point of 80°C or lower include compounds commonly used in the technical field, for example, alcohols such as methanol or ethanol, n-hexane, and ethyl acetate.

The sintering operation may include the operation of heating the dried granule precursor at a temperature of about 800°C to about 1,500°C, about 1,100°C to about 1,400°C, about 1,200°C to about 1,400°C, about 1,250°C to about 1,350°C, or about 1,300°C. The heating operation may be performed for about 30 minutes to 90 minutes. For example, the sintering operation may include the operation of heating the dried granule precursor at a temperature of about 800°C to about 1,500°C, about 1,100°C to about 1,400°C, about 1,200°C to about 1,400°C, about 1,250°C to about 1,350°C, or about 1,300°C for about 30 minutes to 90 minutes. When the sintering process is performed at a temperature within the above-described temperature range, the sintering degree and density of the produced neodymium compound granules may be suitable for use in the above-described electrowinning process.

The weight ratio between the neodymium compound and the graphite powder that are used to produce the granule precursor may be 60:40 to 90:10, 70:30 to 80:20, or 75:25 to 85:15. The binder may be added in an amount of about 0.5 wt.% to about 3 wt.%, about 1 wt.% to about 2 wt.%, or about 1.5 wt.%, based on the total weight of the neodymium compound and the graphite powder.

In one example embodiment, neodymium oxide may be Nd₂O₃, neodymium oxalate may be Nd₂(C₂O₄)₃, and neodymium carbonate may be Nd₂(CO₃)₃. In one example embodiment, neodymium oxide may be praseodymium-neodymium oxide.

In one embodiment, the neodymium compound granule (GR) may have at least one cavity defined therein. During the production of the neodymium compound granules (GR), the cavity (CV) may be defined while graphite is burned or the binder evaporates, and the cavity (CV) may be defined while the neodymium compound is sintered.

In one example embodiment, the apparent density of the granules (GR) may be 2.0 g/cm³ to 6.0 g/cm³, 3.0 g/cm³ to 5.0 g/cm³, or 3.0 g/cm³ to 4.5 g/cm³, and the density of the molten salt may be 3.0 g/cm³ to 6.0 g/cm³, 3.0 g/cm³ to 5.0 g/cm³, 3.5 g/cm³ to 5.0 g/cm³, 4.1 g/cm³ to 5.0 g/cm³, 3.5 g/cm³ to 4.5 g/cm³, or 4.1 g/cm³ to 4.5 g/cm³. In one example embodiment, the cavity percentage may be about 15% or more, about 35% or more, about 40% or more, about 45% or more, about 50% or more, or about 37.55% or more.

The neodymium compound granules (GR) produced by the production method of one example embodiment may be used in the above-described process of electrowinning neodymium. In one embodiment, the produced neodymium compound granule (GR) may be crushed into two or more pieces and used in the process of electrowinning neodymium. In this specification, the term "neodymium compound granule (GR)" is defined as including crushed products of the neodymium compound granule (GR).

### 3. Examples

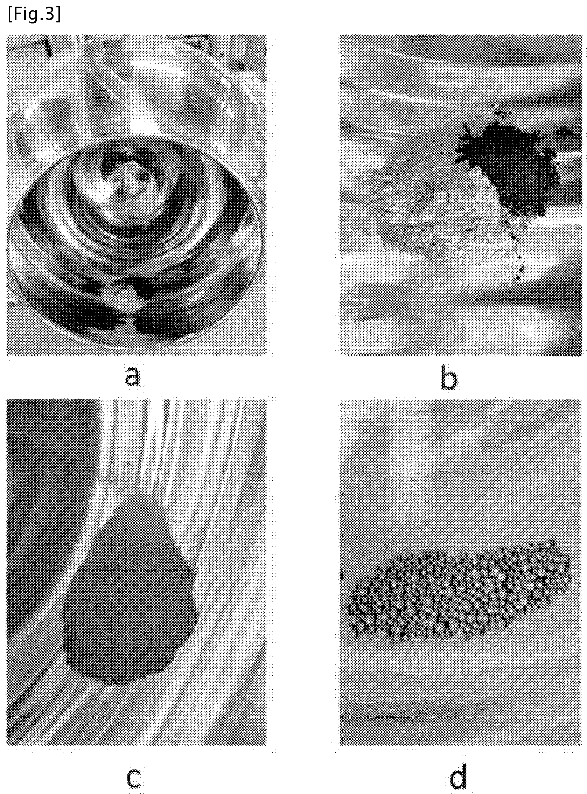

Hereinafter, example will be described in detail with reference to FIGS. 3 to 5 and 6a to 6c, through which the actions and effects of the present disclosure will be demonstrated. However, the following examples are only presented as examples of the present disclosure, and the scope of the present disclosure is not defined thereby.

### Examples of neodymium compound granules (GR)

### (1) Preparation Example 1: Production of granules of Example 1

78.5 g of Nd₂O₃ powder, 20.0 g of graphite powder, and 37.5 g of about 4 wt.% polyvinyl alcohol (PVA) solution were prepared. The prepared Nd₂O₃ powder and graphite powder were placed in a raw material granulator, i.e., a mixing device, which was then rotated at a rotational speed of 100 rpm for about 30 minutes. Then, the PVA solution was added in portions thereto to form granules, and about 10 ml of ethanol was sprayed to make the granules spherical. Then, the granules were dried in a fan heater at 50°C and then recovered.

Subsequently, the produced dried granules were heated at about 1,300°C for 1 hour to burn (oxidize) or evaporate graphite and PVA and sinter Nd₂O₃, thereby producing granules of Example 1.

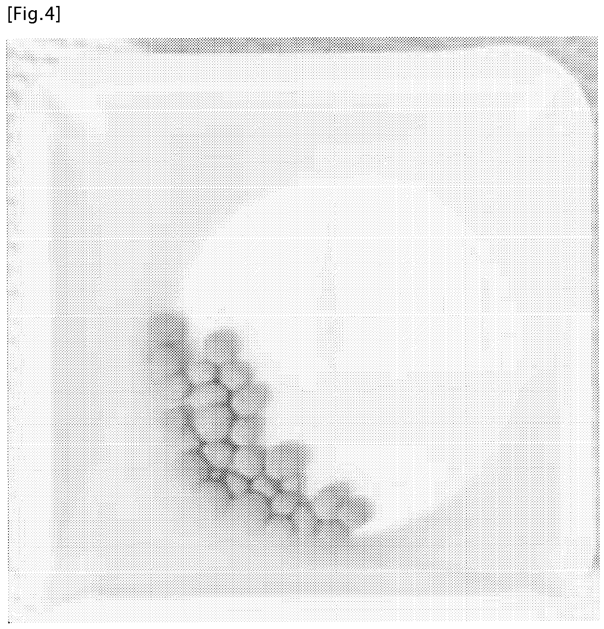

FIGS. 3 and 4 show views based on individual process operations. FIG. 3 shows the operation of mixing Nd₂O₃ powder and graphite powder (a to c), and a granule forming operation and granule spheronization operation (d). FIG. 4 shows neodymium oxide granules (GR) of Example 1 produced by heating the dried granules.

### (2) Preparation Example 2: Production of granules of Example 2

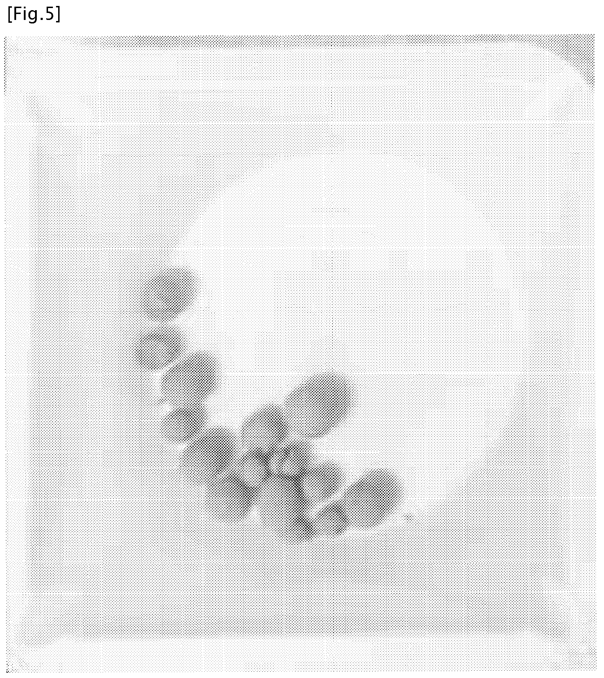

Granules of Example 2 were produced in the same manner as in Preparation Example 1, except that 83.5 g of Nd₂O₃ powder, 15.0 g of graphite powder and 37.5 g of about 4 wt.% polyvinyl alcohol (PVA) solution were used. The produced granules of Example 2 are shown in FIG. 5. FIG. 5 shows the neodymium oxide granules (GR) of Example 2 produced by heating the dried granules.

### (3) Evaluation of produced granules

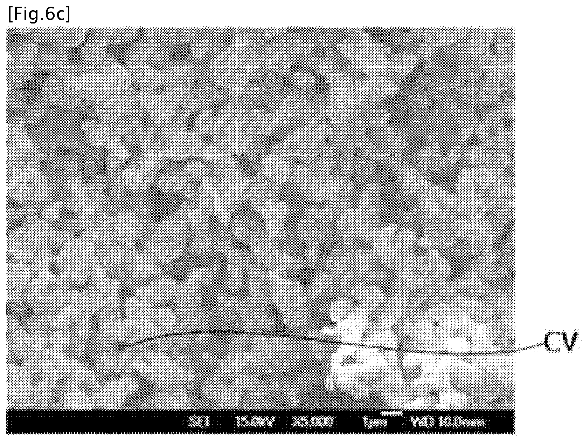

Hereinafter, the results of evaluating the produced granules (GR) will be described in detail with reference to FIGS. 6a to 6c. FIG. 6a is a view showing a piece of the granule of Example 1. FIG. 6b is an enlarged view showing the granule of Example 1 at 1,000× magnification. FIG. 6c is an enlarged view showing the granule of Example 1 at 5,000× magnification. Referring to FIG. 6b, the cavity (CV) defined as the graphite particle was burned is found. Referring to FIG. 6c, the cavity (CV) defined as neodymium oxide was sintered is found. Referring to FIGS. 6a to 6c, it is confirmed that the cavity (CV) is defined in the granule by burning of the graphite particles and sintering of the neodymium oxide, so that the density of the granules (GR) can be lower than that of the electrolyte (EL). In addition, it is confirmed that the strength of the granules (GR) is enhanced by sintering, so that the granules are not easily broken and thus have excellent transportability.

The degree of sintering and density of the granules (GR) of Example 1, and the diameter of the defined cavity (CV) were evaluated in more detail, and the results are shown in Table 1 below.

**[Table 1]**

| | Degree of sintering | Cavity diameter (µm) | Density (g/cm³) |
|---|---|---|---|
| Example 1 | excellent | 1 to 50 | about 3.93 |

Referring to Table 1 above and FIGS. 6a to 6c, it is confirmed that the sintering proceeded well to the inside of the produced granules (GR), and thus the Nd₂O₃ particles are well connected together and have high strength to the extent that they are not easily broken by external impact. In addition, it is confirmed that the density of the granules (GR) is also very suitable for the process of electrowinning a neodymium compound using a fluoride-based electrolyte. Therefore, the neodymium compound-containing granules (GR) produced according to one example embodiment are very suitable for use in the process of electrowinning neodymium.

### Method for electrowinning of neodymium compound

A raw material contained in a ton bag was introduced into each storage hopper using a hoist. The NdF₃ + LiF raw material (electrolyte) mixed in the storage hopper was introduced into an electrowinning bath using a shuttle car and a screw conveyor, which are transport devices. While the electrolyte was melted using a graphite electrode connected to an AC power supply to generate a molten salt, the electrolyte was additionally introduced and melted to an appropriate height. A graphite anode and a tungsten cathode were connected to a DC power supply, and Nd oxide was introduced into the electrowinning bath while applying a current. Nd metal generated in a tungsten crucible at the bottom of the electrowinning bath was scooped out using a titanium ladle or recovered through a tapping spout at the bottom. The recovered metal was solidified using a chain conveyor and an argon chamber to obtain reduced neodymium.

| | | | |
|---|---|---|---|
| EB: | electrolytic bath | CT: | cathode |
| AN: | anode | EL: | electrolyte |
| GR: | granules | ND: | reduced neodymium |

## Claims

1. A method for electrowinning a neodymium compound, the method comprising:
providing a fluoride-based electrolyte (EL) through an opening (EB-O) defined in an electrolytic bath (EB) including a cathode (CT) and an anode (AN);
providing granules (GR), each comprising a neodymium compound and having at least one cavity (CV) defined therein, through the opening (EB-O) defined in the electrolytic bath (EB);
dissolving at least a portion of the granule (GR) in a molten salt of the fluoride-based electrolyte (EL); and
reducing neodymium at the cathode (CT),
wherein the cavity (CV) is defined inside or on a surface of the granule (GR), and an apparent density of the granules (GR) is lower than a density of the molten salt;
wherein at least a portion of each of the cathode (CT) and the anode (AN) is immersed in the molten salt.

2. The method according to claim 1, wherein at least a portion of the anode (AN) is exposed to air; and in the step of providing granules (GR), the granules (GR) cover a surface of the molten salt and at least a portion of an exposed portion of the anode (AN) to block or reduce contact of the anode (AN) and the molten salt with gas.

3. The method according to claim 1, wherein the cathode (CT) comprises tungsten, molybdenum or iron, and the anode (AN) comprises graphite.

4. The method according to claim 1, wherein the granules (GR) have a diameter of 1 mm to 50 mm, wherein when the granule (GR) is not spherical, the diameter of the granules (GR) is the average length of line segments connecting two points on the circumference of the granule (GR) to a straight line passing through the center of gravity of the granule (GR).

5. The method according to claim 1, wherein the granules (GR) have an apparent density of 2.0 g/cm³ to 6.0 g/cm³ and a cavity percentage of 15% or more, wherein the cavity percentage is determined according to the following equation: $\left(1-density of molten salt/density of granules\right) \times 100 .$

6. The method according to claim 1, wherein the fluoride-based electrolyte (EL) comprises LiF and NdF₃.

7. The method according to claim 1, wherein the fluoride-based electrolyte (EL) comprises LiF and NdF₃ at a weight ratio of 40:60 to 5:95.

8. The method according to claim 1, wherein the molten salt has a density of 3.0 g/cm³ to 6.0 g/cm³.

9. The method according to claim 1, wherein the neodymium compound comprises at least one selected from the group consisting of neodymium oxide, praseodymium-neodymium oxide, neodymium oxalate, praseodymium-neodymium oxalate, neodymium carbonate, and praseodymium-neodymium carbonate.

10. The method according to claim 9, wherein the praseodymium-neodymium oxide comprises Nd₂O₃+Pr₆O₁₁ (Nd₂O₃ >70 wt.%), the praseodymium-neodymium oxalate comprises Nd₂(C₂O₄)₃+Pr₂(C₂O₄)₃ (Nd₂(C₂O₄)₃ >70 wt.%), and the praseodymium-neodymium carbonate comprises Nd₂(CO₃)₃+Pr₂(CO₃)₃ (Nd₂(CO₃)₃ >70 wt.%).

11. The method according to claim 1, where the step of providing the granules (GR) comprises the following steps:
forming a granule precursor by adding a binder to neodymium compound powder or adding the binder to a mixture of neodymium compound powder and graphite powder;
drying the granule precursor; and
heat-treating and sintering the dried granule precursor by heating at a temperature of 800°C to 1,500°C.

## Patentansprüche

1. Ein Verfahren zur elektrolytischen Extraktion einer Neodymverbindung, wobei das Verfahren Folgendes beinhaltet:
Bereitstellen eines fluoridbasierten Elektrolyten (EL) durch eine Öffnung (EB-O), die in einem elektrolytischen Bad (EB) definiert ist, das eine Kathode (CT) und eine Anode (AN) umfasst;
Bereitstellen von Körnchen (GR), die jeweils eine Neodymverbindung beinhalten und mindestens einen darin definierten Hohlraum (CV) aufweisen, durch die in dem elektrolytischen Bad (EB) definierte Öffnung (EB-O);
Auflösen mindestens eines Teils des Körnchens (GR) in einem geschmolzenen Salz des fluoridbasierten Elektrolyten (EL); und
Reduzieren von Neodym an der Kathode (CT),
wobei der Hohlraum (CV) innerhalb oder auf einer Oberfläche des Körnchens (GR) definiert ist und eine scheinbare Dichte der Körnchen (GR) niedriger als eine Dichte des geschmolzenen Salzes ist;
wobei mindestens ein Teil sowohl der Kathode (CT) als auch der Anode (AN) in das geschmolzene Salz eingetaucht ist.

2. Verfahren gemäß Anspruch 1, wobei mindestens ein Teil der Anode (AN) gegenüber der Luft freiliegt; und in dem Schritt des Bereitstellens von Körnchen (GR) die Körnchen (GR) eine Oberfläche des geschmolzenen Salzes und mindestens einen Teil eines freiliegenden Teils der Anode (AN) bedecken, um den Kontakt der Anode (AN) und des geschmolzenen Salzes mit Gas zu blockieren oder zu reduzieren.

3. Verfahren gemäß Anspruch 1, wobei die Kathode (CT) Wolfram, Molybdän oder Eisen beinhaltet und die Anode (AN) Graphit beinhaltet.

4. Verfahren gemäß Anspruch 1, wobei die Körnchen (GR) einen Durchmesser von 1 mm bis 50 mm aufweisen, wobei, wenn das Körnchen (GR) nicht kugelförmig ist, der Durchmesser der Körnchen (GR) die durchschnittliche Länge von Liniensegmenten ist, die zwei Punkte auf dem Umfang des Körnchens (GR) mit einer geraden Linie verbinden, die durch den Schwerpunkt des Körnchens (GR) verläuft.

5. Verfahren gemäß Anspruch 1, wobei die Körnchen (GR) eine scheinbare Dichte von 2,0 g/cm³ bis 6,0 g/cm³ und einen Hohlraumanteil von 15 % oder mehr aufweisen, wobei der Hohlraumanteil gemäß der folgenden Gleichung bestimmt wird: (1 - Dichte des geschmolzenen Salzes / Dichte der Körnchen) x 100.

6. Verfahren gemäß Anspruch 1, wobei der fluoridbasierte Elektrolyt (EL) LiF und NdF₃ beinhaltet.

7. Verfahren gemäß Anspruch 1, wobei der fluoridbasierte Elektrolyt (EL) LiF und NdF₃ in einem Gewichtsverhältnis von 40 : 60 bis 5 : 95 beinhaltet.

8. Verfahren gemäß Anspruch 1, wobei das geschmolzene Salz eine Dichte von 3,0 g/cm³ bis 6,0 g/cm³ aufweist.

9. Verfahren gemäß Anspruch 1, wobei die Neodymverbindung mindestens eines beinhaltet, das aus der Gruppe ausgewählt ist, die aus Neodymoxid, Praseodym-Neodymoxid, Neodymoxalat, Praseodym-Neodymoxalat, Neodymcarbonat und Praseodym-Neodymcarbonat besteht.

10. Verfahren gemäß Anspruch 9, wobei das Praseodym-Neodymoxid Nd₂O₃ + Pr₆O₁₁ (Nd₂O₃ > 70 Gew.-%) beinhaltet, das Praseodym-Neodymoxalat Nd₂(C₂O₄)₃ + Pr₂(C₂O₄)₃ (Nd₂(C₂O₄)₃ > 70 Gew.-%) beinhaltet und das Praseodym-Neodymcarbonat Nd₂(CO₃)₃ + Pr₂(CO₃)₃ (Nd₂(CO₃)₃ > 70 Gew.-%) beinhaltet.

11. Verfahren gemäß Anspruch 1, wobei der Schritt des Bereitstellens der Körnchen (GR) die folgenden Schritte beinhaltet:
Bilden eines Körnchenvorläufers durch Zugeben eines Bindemittels zu einem Neodymverbindungspulver oder Zugeben des Bindemittels zu einer Mischung aus Neodymverbindungspulver und Graphitpulver;
Trocknen des Körnchenvorläufers; und
Wärmebehandeln und Sintern des getrockneten Körnchenvorläufers durch Erwärmen auf eine Temperatur von 800 °C bis 1500 °C.

## Revendications

1. Un procédé d'extraction électrolytique d'un composé de néodyme, le procédé comprenant :
la fourniture d'un électrolyte à base de fluorure (EL) à travers une ouverture (EB-O) définie dans un bain électrolytique (EB) incluant une cathode (CT) et une anode (AN) ;
la fourniture de granules (GR), chacun comprenant un composé de néodyme et ayant au moins une cavité (CV) définie dans celui-ci, à travers l'ouverture (EB-O) définie dans le bain électrolytique (EB) ;
la dissolution d'au moins une portion du granule (GR) dans un sel fondu de l'électrolyte à base de fluorure (EL) ; et
la réduction de néodyme au niveau de la cathode (CT),
dans lequel la cavité (CV) est définie à l'intérieur ou sur une surface du granule (GR), et une masse volumique apparente des granules (GR) est inférieure à une masse volumique du sel fondu ;
dans lequel au moins une portion de chacune de la cathode (CT) et de l'anode (AN) est immergée dans le sel fondu.

2. Le procédé selon la revendication 1, dans lequel au moins une portion de l'anode (AN) est exposée à l'air ; et dans l'étape de fourniture de granules (GR), les granules (GR) recouvrent une surface du sel fondu et au moins une portion d'une portion exposée de l'anode (AN) afin de bloquer ou de réduire le contact de l'anode (AN) et du sel fondu avec du gaz.

3. Le procédé selon la revendication 1, dans lequel la cathode (CT) comprend du tungstène, du molybdène ou du fer, et l'anode (AN) comprend du graphite.

4. Le procédé selon la revendication 1, dans lequel les granules (GR) ont un diamètre de 1 mm à 50 mm, dans lequel lorsque le granule (GR) n'est pas sphérique, le diamètre des granules (GR) est la longueur moyenne de segments de droite reliant deux points sur la circonférence du granule (GR) à une ligne droite passant par le centre de gravité du granule (GR).

5. Le procédé selon la revendication 1, dans lequel les granules (GR) ont une masse volumique apparente de 2,0 g/cm³ à 6,0 g/cm³ et un pourcentage de cavité de 15 % ou plus, dans lequel le pourcentage de cavité est déterminé selon l'équation suivante : (1 - masse volumique du sel fondu / masse volumique des granules) x 100.

6. Le procédé selon la revendication 1, dans lequel l'électrolyte à base de fluorure (EL) comprend du LiF et du NdF₃.

7. Le procédé selon la revendication 1, dans lequel l'électrolyte à base de fluorure (EL) comprend du LiF et du NdF₃ à un rapport en poids de 40/60 à 5/95.

8. Le procédé selon la revendication 1, dans lequel le sel fondu a une masse volumique de 3,0 g/cm³ à 6,0 g/cm³.

9. Le procédé selon la revendication 1, dans lequel le composé de néodyme comprend au moins un élément sélectionné dans le groupe constitué par l'oxyde de néodyme, l'oxyde de praséodyme-néodyme, l'oxalate de néodyme, l'oxalate de praséodyme-néodyme, le carbonate de néodyme, et le carbonate de praséodyme-néodyme.

10. Le procédé selon la revendication 9, dans lequel l'oxyde de praséodyme-néodyme comprend du Nd₂O₃+Pr₆O₁₁ (Nd₂O₃ > 70 % en poids), l'oxalate de praséodyme-néodyme comprend du Nd₂(C₂O₄)₃+Pr₂(C₂O₄)₃ (Nd₂(C₂O₄)₃ > 70 % en poids), et le carbonate de praséodyme-néodyme comprend du Nd₂(CO₃)₃+Pr₂(CO₃)3 (Nd₂(CO₃)₃ > 70 % en poids).

11. Le procédé selon la revendication 1, où l'étape de fourniture des granules (GR) comprend les étapes suivantes :
la formation d'un précurseur de granule par ajout d'un liant à une poudre de composé de néodyme ou ajout du liant à un mélange de poudre de composé de néodyme et de poudre de graphite ;
le séchage du précurseur de granule ; et
le traitement thermique et le frittage du précurseur de granule séché par chauffage à une température de 800 °C à 1 500 °C.
